# EUROPÄISCHE PATENTSCHRIFT

(11) **EP 2 005 032 B1**
(45) Veröffentlichungstag und Bekanntmachung des Hinweises auf die Patenterteilung: **15.07.2009**
(21) Anmeldenummer: 07702920.5
(22) Anmeldetag: 20.01.2007
(51) Int. Cl.: F16H 55/08

(54) **VERZAHNUNG EINES EVOLVENTISCH WÄLZVERZAHNTEN ZAHNRADES**
TOOTHING SYSTEM OF A GEARWHEEL HAVING INVOLUTE ROLLER TOOTHING
DENTURE D'UNE ROUE DENTÉE À DENTURE LAMINÉE À DÉVELOPPANTE

(30) Priorität: 31.03.2006 DE 102006015521
(43) Veröffentlichungstag der Anmeldung: 24.12.2008
(73) Patentinhaber: SONA BLW Präzisionsschmiede GmbH, 80807 München (DE)
(72) Erfinder: GUTMANN, Peter, 81927 München (DE); LI, Jin Hong, 80639 München (DE)
(74) Vertreter: Grättinger Möhring von Poschinger Patentanwälte Partnerschaft
(86) Internationale Anmeldenummer: PCT/EP2007/000492
(87) Internationale Veröffentlichungsnummer: WO 2007/118522

(56) Entgegenhaltungen:
- DE-A1- 10 208 408
- DE-A1- 19 958 670
- US-A- 2 389 728
- US-A- 4 106 361

## Beschreibung

Die vorliegende Erfindung betrifft die Verzahnung eines Zahnrades mit einer Mehrzahl an Zähnen, deren Zahnflanken oberhalb eines Zahnfußbereichs der Zahnflanken evolventisch ausgebildet sind, wobei der in einem Normalschnitt betrachtete Zahnfußbereich der Zahnflanken, der sich zwischen einem Fußnutzpunkt und einem Fußpunkt erstreckt, elliptisch ausgebildet ist, im Fußnutzpunkt tangential an den evolventischen Bereich der Zahnflanke anschließt und im Fußpunkt tangential dem Zahnfußkreis anliegt. Ferner betrifft die vorliegende Erfindung ein Zahnrad mit entsprechender Verzahnung sowie eine Zahnradpaarung aus zwei solchen Zahnrädern.

Solche Verzahnungen bzw. Zahnräder mit elliptischer Zahnfußausrundung sind aus dem Stand der Technik bekannt.

Aus der DE 10208408 A1 ist zudem eine nichtevolventische Verzahnung für das Förderrad einer Zahnradpumpe bekannt, bei der die aneinanderstoßenden Zahnköpfe und Zahnfüße der Zähne durch tangential ineinander übergehende elliptische Kurven gebildet werden. Dabei ist insbesondere vorgesehen, daß die in einem Normalschnitt betrachteten, einander zuweisenden Zahnflanken zweier benachbarter Zähne in ihrem Zahnfußbereich durch einen gemeinsamen Teilabschnitt einer Ellipse gebildet sind, deren kleine Halbachse innerhalb der - durch die Radialen durch den Fußpunkt gebildeten - Symmetrieebene durch die Zahnlücke liegt.

Eine weitere Pumpen-Verzahnung ist aus der US 2389728 bekannt, die einen Zahnring mit Innenverzahnung und ein exzentrisch innerhalb der Innenverzahnung des Zahnrings laufendes inneres Zahnrad zeigt. Dabei ist der Flankenverlauf der Zähne der Innenverzahnung des Außenrings im Zahnkopfbereich durch eine Ellipse vorgegeben. Die Geometrie der Verzahnung des inneren Zahnrads wird dann aus dem Verzahnungsgesetz berechnet. Zur Bevorzugung einer Laufrichtung der Pumpe kann die Halbachse der jeweils einen Zahn der Innenverzahnung vorgebenden Ellipse ggfs. gegen die Radialrichtung gekippt sein, so daß sich eine asymmetrische Zahnform und eine Bevorzugung einer Laufrichtung der Pumpenverzahnung ergibt.

Bei evolventisch wälzverzahnten Zahnrädern findet sich in der Praxis zumeist eine Verzahnung mit kreisförmiger Zahnfußausrundung. Allerdings erwähnt die gattungsgemäße DE 19958670 B4 in Zusammenhang mit verschiedensten Zahnradarten die prinzipielle Möglichkeit einer elliptischen Zahnfußausrundung, ohne jedoch hierauf weiter im Detail einzugehen. Aus der Praxis ist es zudem bekannt, daß eine elliptische Zahnfußausrundung die beim Wälzen auftretende Zahnfußspannung reduzieren kann; eine Halbachse der den Flankenverlauf der Verzahnung im Zahnfußbereich vorgebenden Ellipse liegt dabei stets innerhalb der Symmetrieebene der Zahnlücke.

Ausgehend vom vorbekannten Stand der Technik ist es die Aufgabe der vorliegenden Erfindung, eine Verzahnung für ein evolventisch wälzverzahntes Zahnrad der eingangs genannten Art bereitzustellen, die eine nochmals bessere Zahnfußfestigkeit garantiert.

Diese Aufgabe wird mit einer Verzahnung nach Anspruch 1 gelöst. Erfindungsgemäß folgt dabei die in einem Normalschnitt betrachtete Zahnflanke eines Zahns in ihrem Zahnfußbereich - also unterhalb des jeweiligen Fußnutzpunktes - im wesentlichen einem Teilabschnitt einer Ellipse mit verschieden langen Halbachsen a und b, wobei eine Halbachse der Ellipse unter einem Ellipsenkippwinkel alpha größer 0° und kleiner 90° zu einer Radialen durch den Fußpunkt geneigt ist. Ferner sind bei einer erfindungsgemäßen Verzahnung jeweils beide Zahnflanken eines Zahns bezogen auf eine den Zahn in Axialrichtung teilende Symmetrieebene symmetrisch zueinander ausgebildet. Die bereits eingangs genannten Tangentialbedingungen für den Verlauf der Zahnflanke an den beiderseitigen Enden des Zahnfußbereichs der Zahnflanke stellen damit eine Nebenbedingung an den auszuwählenden Teilabschnitt einer Ellipse bzw. an die Ellipse selbst dar.

Mit der Erfindung wird somit eine in beide Laufrichtungen gleichermaßen lauffähige Verzahnung bereitgestellt. Der elliptische Zahnfußbereich einer erfindungsgemäßen Verzahnung ist im Normalschnitt an seinem oberen Ende durch den Fußnutzpunkt und an seinem unteren Ende durch den Fußpunkt begrenzt.

Dabei ist als Fußnutzpunkt im Sinne der Erfindung jeweils derjenige Punkt der in einem Normalschnitt betrachteten Zahnflanke der Verzahnung anzusehen, oberhalb dessen die Verzahnung evolventisch ausgebildet ist. Der Fußnutzpunkt stellt somit in jedem Normalschnitt den untersten Punkt des Flankenverlaufs eines Zahns dar, der mit einer hierzu konjugiert ausgebildeten Verzahnung wälzt. Der Fußnutzpunkt ergibt sich bei bekannten Verzahnungsparametern bevorzugt in bekannter Weise als unterster Berührungspunkt aus dem Verzahnungsgesetz, kann indessen auch oberhalb des untersten Berührungspunkts frei gewählt werden, wenn z.B. der evolventisch wälzverzahnte Bereich der Zahnflanken bewußt verkürzt werden soll, wie dies beispielsweise bei Kegelrädern im Bereich einer Anhebung des Zahnfußes in den voneinander abgewandten Endbereichen der Zähne üblich ist.

Unter Fußpunkt ist der unterste, d.h. der radial innerste, Punkt der im Normalschnitt betrachteten Zahnflanke zu verstehen. Durch ihn wird bei einem Stirnzahnrad in üblicher Weise der Fußkreis des Zahnrades bzw. bei einem Kegelrad der Fußkegel des Kegelrads definiert. Bei Kegelrädern ist jedoch zu beachten, daß der in einem Normalschnitt betrachtete Fußkreis nicht über die gesamte Zahnlänge mit dem Fußkegel zusammenfallen muß, da die Verzahnung eines Kegelrads häufig - insbesondere im Bereich der beiderseitigen Enden der Verzahnung mit dem kleinsten bzw. größten Durchmesser - eine Anhebung der Zahnfußkontur aufweist. In gewissen Bereichen über die Zahnlänge bzw. über den Teilkegelabstand kann sich damit bei einem Kegelrad ein von der Kegelform abweichender Verlauf des Zahnfußes ergeben.

Sofern die Zahnflanken zweier benachbarter Zähne ohne Zwischenbereich direkt ineinander übergehen entspricht die Radiale durch den Fußpunkt im Normalschnitt der Symmetrieachse der Zahnlücke.

Infolge des durch eine - relativ zu der vorgenannten Radialen durch den Fußpunkt - gekippte Ellipse und die beiden Tangentialbedingungen vorgegebenen Flankenverlaufs im Zahnfußbereich erfolgt eine im Vergleich zum vorbekannten Stand der Technik sanftere Querschnittsänderung der Zähne über deren Zahnhöhe, was erfindungsgemäß eine Erhöhung der Zahnfußtragfähigkeit - in beide Laufrichtungen - bewirkt. Eine erfindungsgemäße Verzahnung ist in diesem Punkt nicht nur herkömmlichen Zahnrädern mit kreisförmiger Zahnfußausrundung überlegen, sondern auch einer elliptischen Zahnfußausrundung mit symmetrisch in der Zahnlücke liegender, nicht zur Radialen durch den Fußpunkt geneigter Ellipse.

Bei evolventisch wälzverzahnten Zahnrädern resultiert eine im wesentlichen senkrecht auf die Zahnflanke eines Zahns im Zahnkopfbereich einwirkende Kraft zu einer z.B. nach DIN 3990 oder ISO 6336 berechenbaren Spannungsverteilung im Zahnfußbereich des Zahns, durch die die Zahnfußtragfähigkeit mitbestimmt wird. Bei Kegelrädern wird zur Berechnung der - in Abhängigkeit vom Teilkegelabstand variierenden - Zahnfußspannung bevorzugt für jeden Normalschnitt ein sogenanntes Ersatzstirnrad mit den Verzahnungsparametern des jeweiligen Normalschnitts herangezogen. Verzahnungen mit - bei ansonsten gleichen Bedingungen und gleicher Krafteinwirkung - höheren Spannungen im Zahnfußbereich bieten eine geringere Zahnfußtragfähigkeit. Numerische Berechnungen zeigen, daß mit einer elliptischen Zahnfußausrundung, wie sie der vorliegenden Erfindung zugrunde liegt, die Zahnfußspannung insgesamt geringer ist bzw. im Zahnfußbereich geringere Spannungsspitzen auftreten als bei vorbekannten Verzahnungen. Dies führt zu der gewünschten erhöhten Zahnfußfestigkeit.

Insbesondere gilt dies - infolge der zueinander symmetrischen Ausgestaltung der beiden Zahnflanken der Zähne - auch für eine entsprechende Krafteinwirkung auf die Gegenflanke des Zahns und somit für beide möglichen Laufrichtungen einer mit einer erfindungsgemäßen Verzahnung ausgestalteten Zahnradpaarung.

Der Zahnflankenverlauf im Zahnfußbereich einer erfindungsgemäßen Verzahnung soll dem Teilabschnitt einer wie vorstehend erläutert gekippten Ellipse "im wesentlichen" folgen. Damit sollen neben einem exakten elliptischen Verlauf des Zahnfußbereichs der Zahnflanke auch - z.B. im Rahmen von üblichen Fertigungstoleranzen entstehende - geringfügige Abweichungen mit eingeschlossen sein. Insbesondere kann ein Teilabschnitt einer Ellipse, also ein elliptischer Bogen, jedoch auch durch andere mathematische Funktionen beliebig angenähert werden, so daß auch solche Näherungen, sofern sie nicht signifikant bzw. nur unwesentlich von dem beanspruchten Teilabschnitt einer erfindungsgemäß orientierten Ellipse abweichen, von der vorliegenden technischen Lehre mitumfaßt sein sollen.

In einer ersten bevorzugten Ausführungsform der Erfindung ist vorgesehen, daß - wiederum in einem Normalschnitt durch die Verzahnung betrachtet - die größere der zwei Halbachsen der die Zahnflanke im Zahnfußbereich vorgebenden Ellipse um den Ellipsenkippwinkel alpha mit 0° < alpha < 45° von der Radialen durch den Fußpunkt in Richtung zur jeweiligen Zahnflanke hin geneigt ist. Vorteilhaft liegt der Fußpunkt der Verzahnung dabei tiefer als er bei einer kreisförmigen Zahnfußausrundung mit konstantem Radius und entsprechenden Tangentialbedingungen liegen würde. Infolge des gegenüber einer konventionellen Zahnfußausrundung mit kreisförmiger Zahnfußausrundung tiefer liegenden Fußpunkts ergibt sich somit ein - radial vom Fußpunkt zum Zahnkopf gemessen - höherer Zahn. Obwohl dies bei einer im Zahnkopfbereich senkrecht auf die Zahnflanke wirkenden Kraft zu einer längeren Hebelwirkung führt, sind auch hier die Spannungsspitzen im Zahnfußbereich gegenüber einer herkömmlichen Verzahnung reduziert. Dies liegt wiederum daran, daß sich durch den von einem Teilabschnitt einer gekippten Ellipse vorgegebenen Zahnfußbereich der Querschnitt des Zahns über seine Höhe sanfter ändert. Der längere Hebel hat zudem einen weiteren Effekt: Es ergibt sich nämlich eine etwas geringere Federsteifigkeit des Zahns bzw. eine leicht erhöhte Durchsenkung des Zahnkopfs. Dies führt in Verbindung mit der geringeren Zahnfußspannung zu einer Verminderung der Auswirkung von Eingriffsstößen, was wiederum die Zahnfußtragfähigkeit erhöht.

Gemäß einer weiteren vorteilhaften Ausführungsform der Erfindung ist vorgesehen, daß die Ellipsenparameter, d.h. die Länge der Halbachsen a und b der Ellipse sowie der Ellipsenkippwinkel alpha, derart gewählt sind, daß der - bei der Auslegung der Verzahnung unter vorgegebener Krafteinwirkung im Bereich des Zahnkopfes numerisch berechnete - maximale Spannungswert im Fußbereich des Zahnes minimiert ist. Der maximale Spannungswert im Fußbereich eines Zahns der Verzahnung ist nämlich, wie numerische Berechnungen zeigen, abhängig von den gewählten Ellipsenparametern, womit die Zahnfußtragfähigkeit durch geschickte Wahl der Ellipsenparameter nochmals verbessert werden kann. Dabei ist ersichtlich stets dafür Sorge zu tragen, daß ein Teilabschnitt der durch die Ellipsenparameter vorgegebenen Ellipse die Tangentialbedingungen im Fußnutzpunkt und im Fußpunkt erfüllt. Eine Minimierung der maximal im Fußbereich des Zahns auftretenden Spannung kann beispielsweise unter Variation der Ellipsenparameter a, b und alpha innerhalb geeigneter Wertebereiche und jeweilige Berechnung der resultierenden Spannungsverteilung im Zahnfußbereich des Zahns erfolgen. Dem Fachmann sind die insoweit heranzuziehenden numerischen Verfahren geläufig, mit denen wie vorstehend erläutert eine hinsichtlich einer möglichst niedrigen Zahnfußspannung optimierte Zahnflanke im Zahnfußbereich berechenbar ist.

Ferner kann eine erfindungsgemäße Verzahnung bevorzugt derart ausgestaltet sein, daß die Zahnflanken zweier benachbarter Zähne ohne Zwischenbereich direkt ineinander übergehen, was durch die jeweilige Tangentialbedingung im Fußpunkt der einander zuweisenden Zahnflanken möglich ist. Die einander angrenzenden Zahnfußbereiche der Zahnflanken der beiden Zähne werden dabei somit jeweils von einem Teilabschnitt zweier verschieden orientierter Ellipsen definiert; die jeweiligen Ellipsen besitzen gleich lange Halbachsen a und b und sind mit einer Halbachse - jeweils ausgehend von der Symmetrieebene durch die Zahnlücke - um einen gleichen Winkel alpha zur jeweiligen Zahnflanke hin geneigt ist.

Die vorliegende Erfindung betrifft neben der erfindungsgemäßen Verzahnung als solche auch ein mit einer erfindungsgemäßen Verzahnung ausgestattetes Zahnrad sowie eine Zahnradpaarung aus zwei entsprechenden Zahnrädern.

Bei einem erfindungsgemäßen Zahnrad kann es sich vorteilhaft um ein Stirnrad oder ein Kegelrad handeln, die bevorzugt geradverzahnt ausgestaltet sein können. Die patentgemäße Lehre ist indessen nicht hierauf beschränkt, da die Erfindung prinzipiell auch bei schrägverzahnten Zahnrädern Anwendung finden kann. Hierbei wäre dann als Normalschnitt eine senkrecht zum Schrägungswinkel verlaufende Schnittebene heranzuziehen.

Bei Stirnrädern mit erfindungsgemäßer Verzahnung kann der elliptische Zahnfußbereich der Zahnflanke bevorzugt über die gesamte axiale Länge bzw. Breite des Zahns konstant verlaufen. Ebenso denkbar ist jedoch auch eine Variation der Ellipsenparameter über die Zahnbreite, insbesondere falls die Zahnflanken mit einer Breitenballigkeit z.B. in Form von Endrücknahmen, die beispielsweise durch eine Variation der Profilverschiebung erzeugt werden kann, oder einer anderen, den evolventischen Zahnflankenbereich beeinflussenden Modifikation ausgestaltet sind. Im Bereich einer solchen Modifikation ist eine Anpassung der Ellipsenparameter zur Erfüllung der Tangentialbedingungen zweckmäßig bzw. notwendig. Je nach Art der Modifikation können ggfs. ein oder auch mehrere Ellipsenparameter entsprechend angepaßt und andere konstant gehalten werden.

Demgegenüber ist bei Kegelrädern eine Anpassung eines oder mehrerer Ellipsenparameter an den jeweiligen Teilkegelabstand erforderlich. Gemäß einer vorteilhaften Ausführungsform der Erfindung ist daher ein erfindungsgemäßes Kegelrad derart ausgestaltet, daß die Länge der Halbachsen a und b der Ellipse und/oder der Ellipsenkippwinkel alpha über den Teilkegelabstand des jeweils betrachteten Normalschnitts variieren.

Bei einem Kegelrad mit regulärer Verzahnung kann diese Anpassung vorteilhaft relativ einfach realisiert sein, z.B. indem - ausgehend von den für einen bestimmten Teilkegelabstand gewählten Ellipsenparametern - der Ellipsenkippwinkel alpha über die gesamte Zahnlänge konstant gewählt wird und zur Erfüllung der jeweiligen Tangentialbedingungen im jeweiligen Teilkegelabstand nur die jeweilige Länge der Halbachsen der Ellipse - ggfs. bei konstantem Halbachsenverhältnis a/b - in Abhängigkeit vom Teilkegelabstand angepaßt werden.

Ist allerdings die Kegelverzahnung über die Länge der Zähne weiteren Modifikationen unterworfen, die nicht nur mit dem in Abhängigkeit vom Teilkegelabstand größeren Teilkreis zusammenhängen, so sind bevorzugt alle Ellipsenparameter für jeden Teilkegelabstand separat anzupassen.

Es bietet sich hierzu bei der Auslegung der Verzahnung an, die Ellipsenparameter zunächst für bestimmte Teilkegelabstände festzulegen. In den jeweiligen Zwischenbereichen kann die Zahnflanke im Zahnfußbereich dann - unter Beachtung der Tangentialbedingungen - z.B. mittels gängiger Interpolationsmethoden allmählich von dem einen Ellipsenbogen in den anderen Ellipsenbogen überführt werden. Ferner kann die Zahnflanke im Zahnfußbereich in den Zwischenbereichen vorteilhaft auch durch Vorgabe jeweils exakter Ellipsenparameter für jeden Teilkegelabstand vorgegeben werden, die sich z.B. aus einer - ggfs. linearen - Interpolation der am Rand des Zwischenbereichs vorgewählten Ellipsenparameter ergeben können. Auch hier ist jedoch auf die Erfüllung der Tangentialbedingungen im Fußnutzpunkt und im Fußpunkt zu achten, um einen fließenden Übergang des Zahnfußes in die Evolvente einerseits und in die Zahnflanke des anderen Zahn bzw. die Zahnlücke andererseits zu erzielen.

Je nach konkreter Ausgestaltung der Verzahnung eines Kegelrads kann es auch zweckmäßig sein, die Verzahnung in Abhängigkeit vom Teilkegelabstand - d.h. über die Länge der Zähne - in verschiedene Bereiche zu unterteilen, innerhalb derer auf geeignete Gesetzmäßigkeiten zur Variation der Ellipsenparameter zurückgegriffen werden kann. Insbesondere kann der Ellipsenkippwinkel in bestimmten Bereichen konstant gehalten werden, während er in anderen Bereichen in Abhängigkeit vom Teilkegelabstand variiert wird. In manchen Bereichen erweist sich ein konstantes Halbachsenverhältnis a/b als sinnvoll, während dieses in anderen Bereichen mit dem Teilkegelabstand - ggfs. linear - variiert werden kann.

Bevorzugt weist ein erfindungsgemäßes Kegelrad eine erfindungsgemäße Verzahnung auf, bei der zumindest über einen Teil der Länge der Zähne sowohl der Ellipsenkippwinkel alpha als auch das Halbachsenverhältnis a/b konstant sind.

Die erfindungsgemäßen Zahnräder sind infolge der komplexen Ausgestaltung des Zahnfußbereiches ihrer Verzahnung bevorzugt umformend hergestellt, z.B. geschmiedet. Auch eine spanabhebende Herstellung ist jedoch möglich.

Die Erfindung wird nun anhand der Zeichnung erläutert. Dabei zeigt:
- Fig. 1: ein Ausführungsbeispiel einer erfindungsge- mäßen Verzahnung eines Stirnzahnrads in ei- nem Normalschnitt,
- Fig. 2: einen axial geführten Schnitt durch ein Ausführungsbeispiel eines erfindungsgemäßen Kegelrads und
- Fig. 3 - 7: verschiedene Normalschnitte durch die Ver- zahnung des Kegelrads nach Fig. 2.

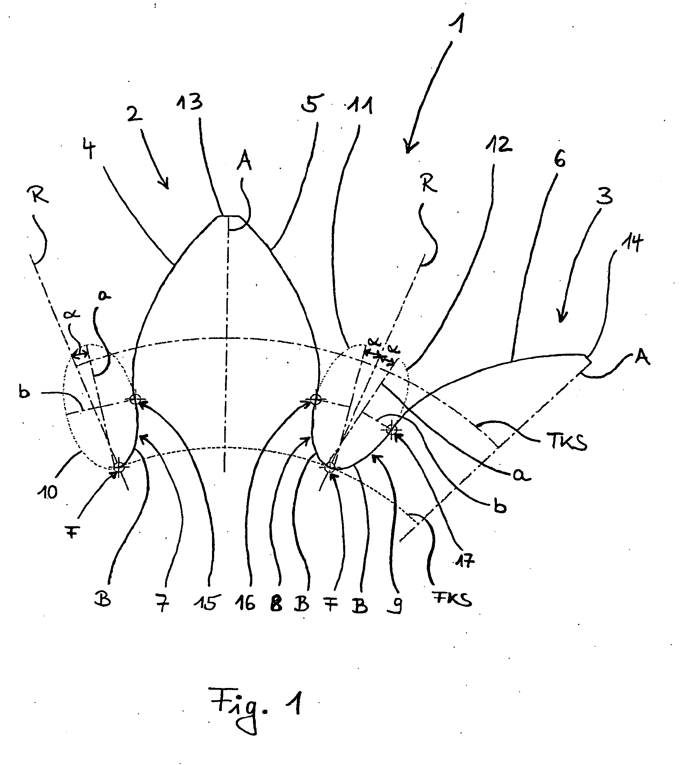

In Fig. 1 ist die Verzahnung 1 eines Ausführungsbeispiels eines erfindungsgemäßen, geradverzahnten Stirnzahnrads in einem Normalschnitt ausschnittsweise dargestellt. Zu erkennen ist der Flankenverlauf zweier Zähne 2, 3, von denen der in Fig. 1 rechts dargestellte Zahn 3 nur bis zu seiner, den Zahn in Axialrichtung teilenden Symmetrieebene A dargestellt ist.

Die Zahnflanken 4, 5, 6 der Zähne 2, 3 sind jeweils oberhalb eines Zahnfußbereichs 7, 8, 9 evolventisch ausgebildet, während der Verlauf der Zahnflanken 4, 5, 6 im Zahnfußbereich 7, 8, 9 jeweils einem Teilabschnitt B einer Ellipse 10, 11, 12 mit Halbachsen a, b mit a > b entspricht. Die elliptisch ausgestalteten Zahnfußbereiche 7, 8, 9 der Zahnflanken 4, 5, 6 sind nach oben, d.h. bezogen auf den in Fig. 1 nicht dargestellten Mittelpunkt des Zahnrads nach radial außen, durch je einen Fußnutzpunkt 15, 16, 17 begrenzt, dem sich dann der bis hin zum jeweiligen Zahnkopf 13, 14 erstreckende evolventische Bereich der Zahnflanken 4, 5, 6 der Zähne 2, 3 anschließt. Im Fußnutzpunkt 15, 16, 17 der jeweiligen Zahnflanke 4, 5, 6 gehen der evolventische Bereich der Zahnflanke 4, 5, 6 und der durch den Teilabschnitt B der Ellipse 10, 11, 12 gebildete Zahnfußbereich 7, 8, 9 der Zahnflanke 4, 5, 6 tangential ineinander über. Die Zahnfußbereiche 7, 8, 9 sind nach unten, d.h. nach radial innen, jeweils durch einen Fußpunkt F begrenzt, in welchem die Zahnfußbereiche 7, 8, 9 tangential am Zahnfußkreis FKS anliegen. Ferner zeigt Fig. 1 auch den Teilkreis TKS der Verzahnung.

Die verschieden langen Halbachsen a, b der jeweiligen, z.T. nur halb dargestellten Ellipsen 10, 11, 12 liegen nicht symmetrisch in der Zahnlücke, sondern sind zur jeweiligen Radialen R durch den Fußpunkt F unter dem Ellipsenkippwinkel alpha größer 0° und kleiner 90° geneigt. Die Radiale R stellt vorliegend eine Symmetrieachse der Verzahnung durch die Zahnlücke dar. Dabei ist jeweils die längere Halbachse a der Ellipse 10, 11, 12 ausgehend von der Symmetrieachse R um den Ellipsenkippwinkel alpha in Richtung zu derjenigen Zahnflanke 4, 5, 6 hin geneigt, deren Zahnfußbereich durch den jeweiligen Teilabschnitt B der Ellipse 10, 11, 12 gebildet wird. Die Symmetrieachsen R und die Symmetrieachsen A schneiden sich gemeinsam in der - nicht dargestellten - Mittelachse des Zahnrads.

Die in Fig. l links dargestellte Zahnflanke 4 des links dargestellten Zahns 2 ist bezogen auf die Symmetrieebene A des Zahns 2 symmetrisch zur zweiten Zahnflanke (Gegenflanke) 5 des gleichen Zahns 2 ausgebildet. Ebenso ist die linke Zahnflanke 6 des in Fig. 1 rechts dargestellten Zahns 3 bezogen auf die dortige Symmetrieebene A symmetrisch zur - nicht dargestellten - zweiten Zahnflanke des gleichen Zahns 3 ausgebildet. Die weiteren Zähne des in Fig. 1 nur ausschnittsweise dargestellten Stirnzahnrads sind identisch ausgestaltet und verlaufen in axialer Richtung bevorzugt mit konstanten Zahnflanken.

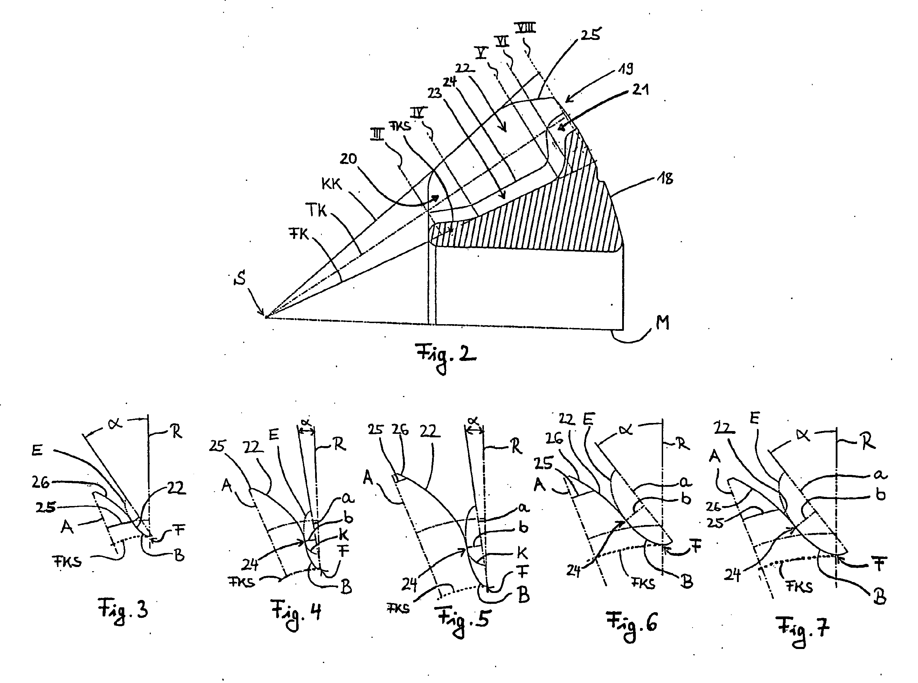

Fig. 2 zeigt einen Längsschnitt durch ein Ausführungsbeispiel eines erfindungsgemäßen, geradverzahnten Kegelrads 18, das als Rotationskörper um die axial verlaufende Mittelachse M ausgebildet ist und eine Mehrzahl an Zähnen 19 aufweist. Als Kennlinien des Kegelrads 18 sind ferner der Fußkegel FK, der Teilkegel TK und der Kopfkegel KK dargestellt, deren jeweilige Verlängerungen sich vorliegend in einem gemeinsam Schnittpunkt S auf der Mittelachse M treffen. Letzteres ist indessen nicht zwingend, da zur Spieleinstellung zweier miteinander wälzender Kegelräder ggfs. auch eine Parallelverschiebung des Kopf- oder Fußkegels vorgesehen sein kann.

In den voneinander abgewandten Endbereichen 20, 21 der Verzahnung ist die Zahnfußkontur angehoben, so daß in diesen Bereichen der Fußkreis FKS radial außerhalb des Fußkegels FK liegt.

Der in Fig. 2 dargestellte Schnitt durch das Kegelrad 18 verläuft genau durch eine Zahnlücke, so daß eine Zahnflanke 22 eines Zahns 19 der erfindungsgemäßen Verzahnung in Frontalansicht erkennbar ist. Dabei ist der Verlauf der Fußnutzpunkte 24 über den Teilkegelabstand eingezeichnet.

Zum Verlauf der Zahnflanke 22 sei auf die Fig. 3 - 7 verwiesen, die verschiedene senkrecht zum Teilkegel TK verlaufende Normalschnitte durch die Zahnflanke 22 bei verschiedenen Teilkegelabständen gemäß den mit römischen Zahlen gekennzeichneten Schnittlinien aus Fig. 2 zeigen. Dabei zeigt Fig. 3 den Schnitt III, Fig. 4 den Schnitt IV, Fig. 5 den Schnitt V, Fig. 6 den Schnitt VI und Fig. 7 den Schnitt VII.

Die Zahnflanke 22 ist in den jeweiligen Normalschnitten - mit Ausnahme des Schnitts von Fig. 3, wo die Zahnflanke 22 infolge einer deutlichen Kopfkürzung bereits unterhalb des dortigen Fußnutzpunktes 24 endet (vgl. auch Fig. 2) - oberhalb des jeweiligen Fußnutzpunktes 24 evolventisch ausgebildet. Unterhalb des Fußnutzpunktes 24 entspricht die Zahnflanke 22 bis hin zum Fußpunkt F stets einem Teilabschnitt B einer - jeweils nur halb dargestellten - Ellipse E mit in Abhängigkeit vom Teilkegelabstand variierenden Halbachsen a und b. Der Teilabschnitt B der jeweiligen Ellipse E endet in jedem Fußpunkt F tangential am Fußkreis FKS und geht in jedem Fußnutzpunkt 24 tangential in den evolventischen Bereich der Zahnflanke 22 über. Die jeweils größere Halbachse a der Ellipse E ist um einen über den Teilkegelabstand variierenden Winkel alpha mit 0° < alpha < 90° ausgehend von der Radialen R durch den jeweiligen Fußpunkt F in Richtung zur Zahnflanke 22 hin geneigt.

In einem zwischen den Schnittlinien IV und V aus Fig. 2 liegenden Bereich der Zahnflanke 22, in dem der jeweilige Fußkreis FKS mit dem Fußkegel FK zusammenfällt und die Fußnutzpunkte 24 ebenfalls längs eines Kegels verlaufen, weist der Ellipsenkippwinkel alpha in jedem Normalschnitt einen konstanten Wert auf. Es werden hier lediglich die Längen der Halbachsen a und b der jeweiligen Ellipsen proportional zum Teilkegelabstand variiert, womit deren Halbachsenverhältnis a/b konstant bleibt. Daher weist auch der Ellipsenkippwinkel alpha in den Fig. 4 und 5 einen annähernd gleichen Wert auf; der geringfügige Unterschied ist letztlich nur darin begründet, daß der Schnitt aus Fig. 5 bereits in einem Bereich der Zahnflanke 22 erfolgt, wo der durch den Fußpunkt F vorgegebene Fußkreis FKS infolge der dort bereits beginnenden Anhebung des Zahnfußes etwas radial außerhalb des Fußkegels FK liegt (vgl. Fig. 2).

Ferner ist der Zahnkopf 25 in den Endbereichen der Verzahnung gegenüber dem Kopfkegel KK zurückgenommen. Ohne diese Zurücknahme würde sich der - in den Fig. 3, 5, 6, und 7 gepunktet dargestellte - Zahnflankenverlauf 26 ergeben.

Die Gegenflanke des in den Fig. 2 - 7 nur halb dargestellten Zahns ist - bezogen auf die Symmetrieebene A - symmetrisch zur Zahnflanke 22 ausgebildet. Die der Zahnflanke 22 zuweisende Zahnflanke des benachbarten Zahns schließt sich - ähnlich wie bei dem Stirnrad aus Fig. 1 - symmetrisch zu der durch die Radialen R gebildeten Symmetrieebene an. Die weiteren Zähne des Kegelrads 18 sind analog ausgestaltet.

## Patentansprüche

1. Verzahnung (1) eines Zahnrades mit einer Mehrzahl an Zähnen (2, 3; 19), deren Zahnflanken (4, 5, 6; 22) oberhalb eines Zahnfußbereichs (7, 8, 9; 23) der Zahnflanken (4, 5, 6; 22) evolventisch ausgebildet sind,
wobei der in einem Normalschnitt betrachtete Zahnfußbereich (7, 8, 9; 23) der Zahnflanken (4, 5, 6; 22), der sich zwischen einem Fußnutzpunkt (15, 16, 17; 24) und einem Fußpunkt (F) erstreckt, elliptisch ausgebildet ist, im Fußnutzpunkt (15, 16, 17; 24) tangential an den evolventischen Bereich der Zahnflanke (4, 5, 6; 22) anschließt und im Fußpunkt (F) tangential dem Zahnfußkreis (FKS) anliegt,
**dadurch gekennzeichnet,**
**daß** die in einem Normalschnitt betrachtete Zahnflanke (4, 5, 6; 22) in ihrem Zahnfußbereich (7, 8, 9; 23) im wesentlichen einem Teilabschnitt (B) einer Ellipse (10, 11, 12; E) mit verschieden langen Halbachsen (a, b) folgt, wobei eine Halbachse (a, b) der Ellipse (10, 11, 12; E) unter einem Ellipsenkippwinkel alpha größer 0° und kleiner 90° zu einer Radialen (R) durch den Fußpunkt (F) geneigt ist und daß die Zahnflanken (4, 5, 6; 22) der Zähne (2, 3; 19) der Verzahnung bezogen auf eine den jeweiligen Zahn (2, 3; 19) in Axialrichtung teilenden Symmetrieebene (A) symmetrisch zueinander ausgebildet sind.

2. Verzahnung nach Anspruch 1, **dadurch gekennzeichnet, daß** die längere Halbachse (a) der zwei Halbachsen (a, b) der Ellipse (10, 11, 12; E) unter einem Ellipsenkippwinkel alpha mit 0° < alpha < 90° von der Radialen (R) durch den Fußpunkt (F) zur Zahnflanke (4, 5, 6; 22) hin geneigt ist.

3. Verzahnung nach Anspruch 1, **dadurch gekennzeichnet, daß** die Halbachsen (a, b) der Ellipse (10, 11, 12; E) sowie der Ellipsenkippwinkel alpha derart gewählt sind, daß die maximale Spannung im Fußbereich des Zahnes bei einer vorgegebenen, senkrecht auf die Zahnflanke (4, 5, 6; 22) im Zahnkopfbereich wirkenden Kraft minimal ist.

4. Verzahnung nach Anspruch 1, **dadurch gekennzeichnet, daß** die einander zugewandten Zahnflanken (5, 6) zweier benachbarter Zähne (2, 3) ohne Zwischenraum tangential ineinander übergehen.

5. Zahnrad mit einer Verzahnung nach einem der Ansprüche 1 bis 4, **dadurch gekennzeichnet, daß** das Zahnrad ein Stirnrad ist.

6. Zahnrad Anspruch 5, **dadurch gekennzeichnet, daß** das Stirnrad geradverzahnt ist.

7. Zahnrad mit einer Verzahnung nach einem der Ansprüche 1 bis 4, **dadurch gekennzeichnet, daß** das Zahnrad ein Kegelrad (18) ist.

8. Zahnrad nach Anspruch 7, **dadurch gekennzeichnet, daß** das Kegelrad geradverzahnt ist.

9. Zahnrad nach Anspruch 7, **dadurch gekennzeichnet, daß** die Länge der Halbachsen a und b der Ellipse (E) und/oder der Ellipsenkippwinkel alpha über den Teilkegelabstand variieren.

10. Zahnrad nach Anspruch 7, **dadurch gekennzeichnet, daß** zumindest über einem Teil der axialen Länge der Verzahnung der Ellipsenkippwinkel alpha und das Halbachsenverhältnis a/b konstant sind.

11. Zahnradpaarung aus zwei Zahnrädern nach einem der Ansprüche 5 bis 10.

## Claims

1. Toothing system (1) of a gear wheel having a multiplicity of teeth (2, 3; 19), the tooth flanks (4, 5, 6; 22) of which are of involute configuration above a tooth root region (7, 8, 9; 23) of the tooth flanks (4, 5, 6; 22),
wherein the tooth root region (7, 8, 9; 23), as viewed in a normal section and which extends between a root use point (15, 16, 17; 24) and a root point (F), of the tooth flanks (4, 5, 6; 22) is of elliptical configuration, adjoins the involute region of the tooth flank (4, 5, 6; 22) tangentially at the root use point (15, 16, 17; 24) and bears tangentially against the tooth root circle (FKS) at the root point (F),
**characterized in that**
in its tooth root region (7, 8, 9; 23), the tooth flank (4, 5, 6; 22), as viewed in a normal section, substantially follows a partial section (B) of an ellipse (10, 11, 12; E) having semiaxes (a, b) of different length, wherein one semiaxis (a, b) of the ellipse (10, 11, 12; E) is inclined at an ellipse tilting angle alpha which is greater than 0° and less than 90° to a radial (R) through the root point (F), and that the tooth flanks (4, 5, 6; 22) of the teeth (2, 3; 19) of the toothing system are configured symmetrically with respect to one another, in relation to a plane of symmetry (A) which divides the respective tooth (2, 3; 19) in the axial direction.

2. The toothing system according to Claim 1, **characterized in that**
the longer semiaxis (a) of the two semiaxes (a, b) of the ellipse (10, 11, 12; E) is inclined at an ellipse tilting angle alpha from the radial (R) through the root point (F) towards the tooth flank (4, 5, 6; 22), with 0° < alpha < 90°.

3. The toothing system according to Claim 1, **characterized in that**
the semiaxes (a, b) of the ellipse (10, 11, 12; E) and the ellipse tilting angle alpha are chosen such that the maximum tension in the root region of the tooth when a predetermined force is acting vertically on the tooth flank (4, 5, 6; 22) is a minimum.

4. The toothing system according to Claim 1, **characterized in that**
the tooth flanks (5, 6) that face each other of two adjacent teeth (2, 3) merge tangentially into each other without an intermediate gap.

5. Gear wheel with a toothing system according to any one of Claims 1 to 4, **characterized in that**
the gear wheel is a spur gear.

6. The gear wheel of Claim 5, **characterized in that**
the spur gear is straight-toothed.

7. Gear wheel with a toothing system according to any one of Claims 1 to 4, **characterized in that**
the gear wheel is a conical gear (18).

8. The gear wheel according to Claim 7, **characterized in that**
the conical gear is straight-toothed.

9. The gear wheel according to Claim 7, **characterized in that**
the lengths of the semiaxes a and b of the ellipse (E) and/or the ellipse tilting angle alpha vary over the partial conical spacing.

10. The gear wheel according to Claim 7, **characterized in that**
the ellipse tilting angle alpha and the semiaxis ratio a/b are constant at least over part of the axial length of the toothing system.

11. Gear wheel pairing composed of two gear wheels according to any one of Claims 5 to 10.

## Revendications

1. Denture (1) d'une roue dentée comprenant une pluralité de dents (2, 3 ; 19), dont les flancs de dent (4, 5, 6 ; 22) sont réalisés en développante au-dessus d'une zone de base de dent (7, 8, 9 ; 23) des flancs de dent (4, 5, 6 ; 22),
la zone de base de dent (7, 8, 9 ; 23) considérée dans une coupe normale, des flancs de dent (4, 5, 6 ; 22), qui s'étend entre un point utile de base (15, 16, 17 ; 24) et un point de base (F), est conçue de façon elliptique, se raccordant au point utile de base (15, 16, 17 ; 24) de façon tangentielle à la zone en développante du flanc de dent (4, 5, 6 ; 22) et s'applique au point de base (F) de façon tangentielle au cercle de base de dent (FKS),
**caractérisée en ce que**
le flanc de dent (4, 5, 6 ; 22), vu dans une coupe normale, suit dans sa zone de base de dent (7, 8, 9 ; 23) essentiellement une section partielle (B) d'une ellipse (10, 11, 12 ; E) avec des demi-axes (a, b) de longueurs différentes, un demi-axe (a, b) de l'ellipse (10, 11, 12 ; E) étant incliné sous un angle de basculement d'ellipse alpha supérieur à 0° et inférieur à 90° par rapport à une radiale (R) passant par le point de base (F) et **en ce que** les flancs de dent (4, 5, 6 ; 22) des dents (2, 3 ; 19) de la denture sont conçus de façon symétrique entre eux par rapport à un plan de symétrie (A) divisant la dent (2, 3 ; 19) respective dans la direction axiale.

2. Denture selon la revendication 1, **caractérisée en ce que**
le demi-axe (a) plus long des demi-axes (a, b) de l'ellipse (10, 11, 12 ; E) est incliné sous un angle de basculement d'ellipse alpha avec 0° < alpha < 90° à partir de la radiale (R) à travers le point de base (F) en direction du flanc de dent (4, 5, 6 ; 22).

3. Denture selon la revendication 1, **caractérisée en ce que**
les demi-axes (a, b) de l'ellipse (10, 11, 12 ; E) ainsi que l'angle de basculement d'ellipse alpha sont choisis de telle sorte que la tension maximale dans la zone de base de la dent est minimale dans le cas d'une force prédéfinie et agissant perpendiculairement au flanc de dent (4, 5, 6 ; 22) dans la zone du sommet de la dent.

4. Denture selon la revendication 1, **caractérisée en ce que**
les flancs de dent (5, 6), tournés les uns vers les autres, de deux dents (2, 3) voisines sont imbriquées les unes dans les autres de façon tangentielle sans espace intermédiaire.

5. Roue dentée comprenant une denture selon l'une quelconque des revendications 1 à 4, **caractérisée en ce que**
la roue dentée est une roue droite.

6. Roue dentée selon la revendication 5, **caractérisée en ce que**
la roue droite est à denture droite.

7. Roue dentée avec une denture selon l'une quelconque des revendications 1 à 4, **caractérisée en ce que**
la roue dentée est une roue conique (18).

8. Roue dentée selon la revendication 7, **caractérisée en ce que**
la roue conique est à denture droite.

9. Roue dentée selon la revendication 7, **caractérisée en ce que**
la longueur des demi-axes a et b de l'ellipse (E) et/ou l'angle de basculement de l'ellipse alpha varient en fonction de la distance au cône primitif.

10. Roue dentée selon la revendication 7, **caractérisée en ce que**
l'angle de basculement d'ellipse alpha et le rapport des demi-axes a/b sont constants au moins sur une partie de la longueur axiale de la denture.

11. Appariement de roue dentée constitué de deux roues dentées selon l'une quelconque des revendications 5 à 10.
